# EUROPEAN PATENT APPLICATION

(11) **EP 4 844 616 A1**
(43) Date of publication of application: **25.11.2026**
(21) Application number: 25751172.5
(22) Date of filing: 21.01.2025
(51) Int. Cl.: G06F 21/64, G06F 21/60, G06F 21/53, G06F 21/51

(54) **SDK INTEGRITY CHECK**

(30) Priority: 07.02.2024 CN 202410174700
(71) Applicant: Alipay (Hangzhou) Digital Service Technology Co., Ltd., Hangzhou, Zhejiang 310000 (CN)
(72) Inventor: ZHANG, Wanqiao, Hangzhou, Zhejiang 310000 (CN); HUANG, Lin, Hangzhou, Zhejiang 310000 (CN); WANG, Wenshuo, Hangzhou, Zhejiang 310000 (CN)
(74) Representative: Winter, Brandl - Partnerschaft mbB
(86) International application number: PCT/CN2025/073500
(87) International publication number: WO 2025/167570

(57) **Abstract**

An SDK integrity check method and apparatus, and a medium and a device. A first hash value is calculated for normative information of integrity-related files in an SDK, and the first hash value is then stored in a trusted execution environment on an electronic device, such that it can be ensured that the first hash value cannot be tampered with locally on the electronic device. In this way, the SDK then calls the trusted execution environment to perform secure and trusted integrity checking, that is, the trusted execution environment is called to determine, by means of comparison, whether the first hash value is consistent with a second hash value.

## Description

### TECHNICAL FIELD

The present disclosure relates to the field of computer technologies, and in particular, to a method, an apparatus, a storage medium and a device for verifying integrity of a software development kit (SDK).

### BACKGROUND

A software development kit (SDK) is a collection of related documents, examples, and tools that assist in developing a certain type of software. Some technology service providers package their technology service solutions into SDKs and provide the SDKs to application software developers, who embed the SDKs in the application software they develop.

To protect data security of an SDK and to ensure functional compliance of the SDK, integrity verification of the SDK is required when the SDK embedded in the application software is initialized. The purpose of performing integrity verification of the SDK is to ensure that information of integrity-related files (for example, certain configuration files and interface invocation chains) related to data security, functional compliance, and other requirements within the SDK has not been tampered with.

Based on the above, a technical solution that can implement integrity verification of an SDK in an offline environment is needed.

### SUMMARY

Embodiments of this specification provide a method for verifying integrity of a software development kit (SDK). An electronic device has a trusted execution environment. A first hash value is stored in the trusted execution environment. The first hash value is a hash value of normative information of integrity-related files in the SDK. Application software on the electronic device has the SDK embedded therein. The method includes: in response to the application software requesting initialization of the SDK, reading current information of the integrity-related files in the SDK, and calculating a hash value of the current information as a second hash value; invoking the trusted execution environment to compare the first hash value with the second hash value; and in response to determining that the first hash value matches the second hash value, determining that integrity verification of the SDK is passed.

Embodiments of this specification provide an apparatus for verifying integrity of an SDK. An electronic device has a trusted execution environment. A first hash value is stored in the trusted execution environment. The first hash value is a hash value of normative information of integrity-related files in the SDK. Application software on the electronic device has the SDK embedded therein. The apparatus includes: a reading module, configured to, in response to the application software requesting initialization of the SDK, read current information of the integrity-related files in the SDK, and calculate a hash value of the current information as a second hash value; an invocation module, configured to invoke the trusted execution environment to compare the first hash value with the second hash value; and a determining module, configured to, in response to determining that the first hash value matches the second hash value, determine that integrity verification of the SDK is passed.

Embodiments of this specification further provide a computer program product. The computer program product stores at least one instruction. The at least one instruction is adapted to be loaded and executed by a processor to perform the steps of the above method.

Embodiments of this specification further provide a storage medium. The storage medium stores a computer program. The computer program is adapted to be loaded and executed by a processor to perform the steps of the above method.

Embodiments of this specification further provide an electronic device, including: a processor and a memory; where the memory stores a computer program, and the computer program is adapted to be loaded and executed by the processor to perform the steps of the above method.

In embodiments of this specification, a hash value (i.e., the first hash value) is calculated from normative information (i.e., information that the SDK provider has determined to be correct and compliant) of integrity-related files (files involved in integrity verification that need to be ensured not to have been tampered with) in the SDK, and the first hash value is stored in a trusted execution environment (TEE) on the electronic device, which can ensure that the first hash value is not tampered with locally on the electronic device. In this way, the SDK invokes the trusted execution environment to perform secure and trusted integrity verification, i.e., invoking the trusted execution environment to compare the first hash value with the second hash value (a hash value of the current information of the integrity-related files in the SDK that may have been tampered with).

Through embodiments of this specification, the process of performing integrity verification of the SDK does not depend on an online environment of the electronic device (the technical solution of the present disclosure can be implemented in an online environment of the electronic device), and even in an offline environment of the electronic device, integrity verification of the SDK can be implemented.

### BRIEF DESCRIPTION OF DRAWINGS

FIG. 1 is a schematic flowchart of a method for verifying integrity of an SDK provided by this disclosure.
FIG. 2 is a schematic diagram of a method for verifying integrity of an SDK provided by this disclosure.
FIG. 3 is a schematic diagram of another method for verifying integrity of an SDK provided by this disclosure.
FIG. 4 is a schematic diagram of storing a first hash value based on an online environment of an electronic device provided by this disclosure.
FIG. 5 is a schematic diagram of another method for verifying integrity of an SDK provided by this disclosure.
FIG. 6 is a schematic structural diagram of an apparatus for verifying integrity of an SDK provided by this disclosure.
FIG. 7 is a schematic structural diagram of an electronic device provided by embodiments of this specification.

### DETAILED DESCRIPTION

To make the objectives, technical solutions, and advantages of this specification clearer, the technical solutions of this specification will be clearly and integrally described below in conjunction with specific embodiments and corresponding drawings of this specification. Clearly, the described embodiments are only some embodiments of this specification, rather than all embodiments. All other embodiments obtained by a person of ordinary skill in the art based on the embodiments in this specification without creative efforts shall fall within the scope of protection of this specification.

An SDK assists in the development of application software through compilers, debuggers, software frameworks, and the like. In simple terms, SDK can provide application program interface (API) files for a certain programming language. An SDK also often includes sample code, supporting technical notes, or other supporting documentation to clarify questions for basic reference materials.

In this disclosure, the party that develops the application software is referred to as the application software developer, and the technology service provider that provides the SDK to the application software is referred to as the SDK provider. The application software developer embeds the SDK in the application software developed by themselves.

The SDK provider needs to ensure that some key information in the SDK is not tampered with by the application software developer. If such key information is tampered with by the application software developer, it means that data privacy of the SDK is compromised (such as leakage of core code) and the functions of the SDK may no longer be compliant.

For example, an SDK provides a transaction payment settlement solution. A certain e-commerce application software has the SDK embedded therein. The application software developer modifies some configuration files in the SDK, causing that each time a user inputs a payment amount of X, the deduction amount transmitted to the transaction payment backend becomes 2X.

To protect data security of the SDK and to ensure functional compliance of the SDK, integrity verification of the SDK is required when the SDK embedded in the application software is initialized. This disclosure refers to the key files in the SDK related to data security, functional compliance, and other requirements as integrity-related files (for example, certain configuration files and interface invocation chains). The purpose of performing integrity verification of the SDK is to ensure that information of the integrity-related files related to data security, functional compliance, and other requirements within the SDK has not been tampered with.

Typically, application software is installed on an electronic device (a mobile phone, a personal computer, a tablet computer, etc.), the application software has the SDK embedded therein, and when the SDK is initialized, integrity verification can be performed through network interaction with a server of the SDK provider. However, if the electronic device is in an offline environment, the SDK cannot perform network interaction with the server of the SDK provider, and thus integrity verification cannot be implemented.

To this end, in one or more embodiments of this disclosure, a hash value (i.e., the first hash value) is calculated from normative information (i.e., information that the SDK provider has determined to be correct and compliant) of integrity-related files (files involved in integrity verification that need to be ensured not to have been tampered with) in the SDK, and the first hash value is stored in a trusted execution environment on the electronic device, which can ensure that the first hash value is not tampered with locally on the electronic device. In this way, the SDK invokes the trusted execution environment to perform secure and trusted integrity verification, i.e., invoking the trusted execution environment to compare the first hash value with the second hash value (a hash value of the current information of the integrity-related files in the SDK that may have been tampered with) to determine whether they match.

As such, the process of performing integrity verification of the SDK may not depend on an online environment of the electronic device (the technical solution of the present disclosure can be implemented in an online environment of the electronic device), and even in an offline environment of the electronic device, integrity verification of the SDK can be implemented.

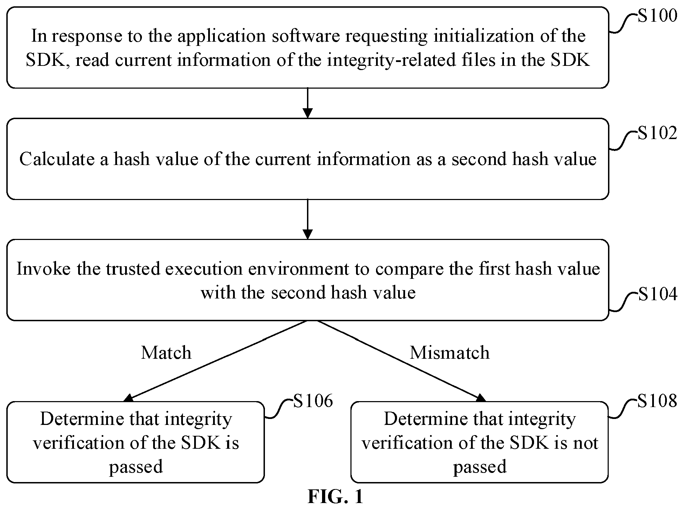

FIG. 1 is a schematic flowchart of a method for verifying integrity of an SDK provided by this disclosure, including the following steps.

S100: in response to the application software requesting initialization of the SDK, reading current information of the integrity-related files in the SDK.

In one or more embodiments of this disclosure, the electronic device has a trusted execution environment. A first hash value is stored in the trusted execution environment. The first hash value is a hash value of normative information of integrity-related files in a software development kit (SDK). Application software on the electronic device has the SDK embedded therein.

The above normative information can be understood as information that the SDK provider has determined to be correct and compliant. If the specific information of the integrity-related files in the SDK is the normative information, then the information of the integrity-related files in the SDK has not been tampered with, the integrity of the SDK has not been compromised, and the integrity verification of the SDK can be passed.

The above first hash value needs to be stored in the trusted execution environment to ensure that the first hash value cannot be tampered with locally on the electronic device (for example, by the application software developer, a user of the electronic device, etc.).

It should be noted that, in practice, there can be a plurality of different application software programs, and all of these application software programs can have the respective SDKs embedded therein. For different application software programs, the integrity-related files in the SDKs may be different, which means that for different application software programs, the integrity-related files involved in the integrity verification of the embedded SDKs may be different. For this situation, the trusted execution environment may store first hash values respectively corresponding to different application software programs.

The execution entity of the method flow shown in FIG. 1 can be the application software (specifically, an application module within the application software), or can be the SDK.

When the application software is running, if it needs to invoke related functions of the SDK, it needs to request initialization of the SDK. When initialization of the SDK is requested, integrity verification of the SDK needs to be performed, and only after ensuring that the integrity verification of the SDK is passed can the SDK be allowed to initialize so that the application software can invoke the related functions of the SDK.

When performing integrity verification of the SDK, the information of the integrity-related files in the SDK that is read is referred to as the current information. The current information may be consistent with the normative information, or may have been tampered with (and thus be inconsistent with the normative information). The essence of the integrity verification is to verify whether the current information herein is consistent with the normative information. If they are consistent, the verification is passed; if they are inconsistent, the verification is not passed.

S102: calculating a hash value of the current information as a second hash value.

This disclosure does not limit the hash algorithm used. Typically, the hash algorithm used for performing hash calculation on the normative information and on the current information respectively needs to be consistent.

S104: invoking the trusted execution environment to compare the first hash value with the second hash value.

The process of comparing the first hash value with the second hash value using the trusted execution environment is secure, and this comparison process is not subject to local interference from the electronic device, so the comparison result is also trustworthy.

Specifically, when the application software or the SDK invokes the trusted execution environment, the second hash value can be sent to the trusted execution environment. The logic of comparing whether the first hash value matches the second hash value is executed in the trusted execution environment, and the trusted execution environment can feed back the comparison result to the application software or the SDK that invoked the trusted execution environment.

S106: in response to determining that the first hash value matches the second hash value, determining that the integrity verification of the SDK is passed.

After determining that the integrity verification of the SDK is passed, initialization of the SDK can begin.

S108: in response to determining that the first hash value does not match the second hash value, determining that the integrity verification of the SDK is not passed.

After determining that the integrity verification of the SDK is not passed, initialization of the SDK can be refused.

Additionally, in some embodiments, on one hand, considering that for different application software programs, the integrity-related files of the embedded SDKs may be different (meaning that the normative information of the integrity-related files is different), and on the other hand, considering that for the same application software, the version of the embedded SDK may be iteratively updated (causing the normative information of the integrity-related files to be updated and changed). Therefore, the trusted execution environment of the electronic device may store a plurality of first hash values, and different first hash values are based on different application software programs or based on different SDK versions.

That is, the trusted execution environment may store an association relationship among the first hash value, a software identifier of the application software, and a version identifier of the SDK. The trusted execution environment may have a plurality of first hash values and a plurality of the above association relationships.

As such, the method flow shown in FIG. 1 is for a specific application software (having a specific software identifier) and a specific SDK version (having a specific version identifier). In step S104, the trusted execution environment can be invoked to determine the first hash value associated with the software identifier and the version identifier, and compare the first hash value with the second hash value.

In some embodiments, the SDK provider can designate a set of keys (including a decryption key and an encryption key), and synchronize the decryption key to the trusted execution environment of the electronic device in advance. Before providing the SDK to the application software developer, the SDK provider can encrypt the first hash value of the normative information of the integrity-related files in the SDK using the encryption key, and include the ciphertext of the first hash value in the SDK.

In this case, when the application software requests initialization of the SDK for the first time, the ciphertext of the first hash value in the SDK and the second hash value of the current information of the integrity-related files in the SDK can be provided together to the trusted execution environment. The trusted execution environment is invoked to decrypt the ciphertext of the first hash value and compare the first hash value with the second hash value. Meanwhile, the trusted execution environment can also store the first hash value, so that when the application software subsequently requests initialization of the SDK again, it is no longer necessary to transmit the ciphertext of the first hash value to the trusted execution environment, thereby saving decryption computing power of the trusted execution environment.

Further, in embodiments where a plurality of groups of association relationships among the first hash value, the software identifier, and the version identifier of the SDK are maintained in the SDK, the step of storing the first hash value in the trusted execution environment may include: obtaining the software identifier of the application software and the version identifier of the SDK; decrypting the ciphertext of the first hash value and storing the first hash value; and storing the association relationship among the first hash value, the software identifier of the application software, and the version identifier of the SDK.

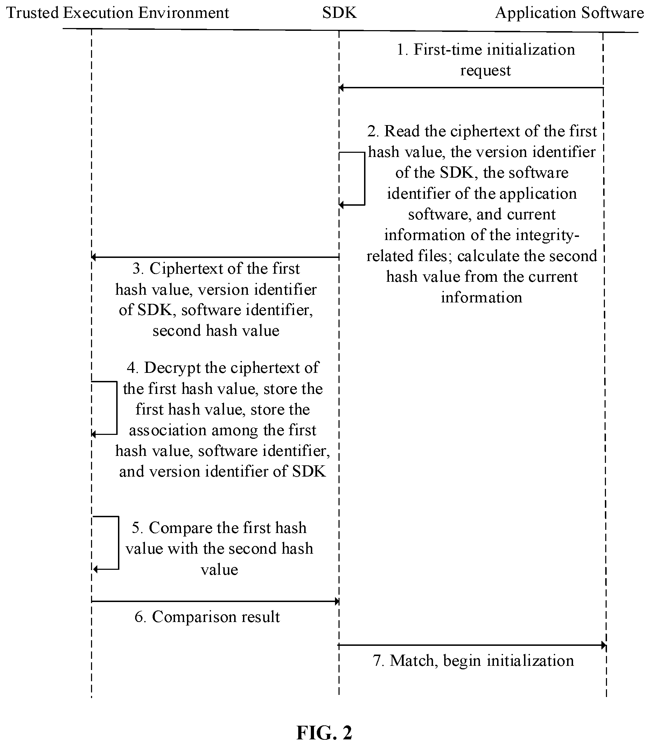

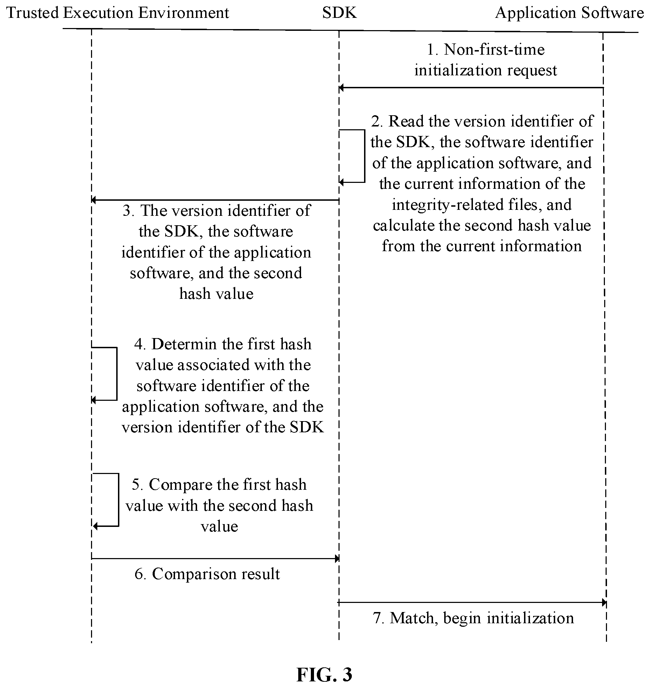

FIG. 2 is a schematic diagram of a method for verifying integrity of an SDK provided by this disclosure. As shown in FIG. 2, the SDK includes the ciphertext of the first hash value. The application software (specifically, an application module within the application software other than the SDK) sends an initialization request to the SDK. The SDK needs to perform integrity verification on itself. On one hand, the SDK reads the ciphertext of the first hash value included therein; on the other hand, the SDK reads the current information of the integrity-related files and calculates the second hash value. The SDK transmits the first hash value, the second hash value, the software identifier of the application software, and the version identifier of the SDK to the trusted execution environment, and invokes the trusted execution environment to perform the comparison (comparing the first hash value with the second hash value). If it is the integrity verification involved in the first-time initialization of the SDK, the trusted execution environment stores the first hash value and the association relationship among the first hash value, the software identifier of the application software, and the version identifier of the SDK, and feeds back the comparison result to the SDK. If the SDK determines that the first hash value matches the second hash value, the SDK begins initialization. Based on FIG. 2, if it is not the integrity verification involved in the first-time initialization, reference may be made to FIG. 3.

Additionally, in some embodiments, the SDK provider can designate a set of keys (including a decryption key and an encryption key), and synchronize the decryption key to the trusted execution environment of the electronic device in advance. The SDK provider can encrypt the first hash value of the normative information of the integrity-related files in the SDK using the encryption key. The step of storing the first hash value in the trusted execution environment may include: before the application software requests initialization of the SDK, obtaining the ciphertext of the first hash value from the server of the SDK provider in advance in an online environment of the electronic device, transmitting the ciphertext of the first hash value to the trusted execution environment, and invoking the trusted execution environment to decrypt the ciphertext of the first hash value and store the first hash value. The above step of storing the first hash value in the trusted execution environment can be performed by the application software.

It can be understood that, in the above embodiments, the step of storing the first hash value in the trusted execution environment needs to depend on the online environment of the electronic device, while in the integrity verification process performed when requesting initialization of the SDK, it still does not need to depend on the online environment of the electronic device.

Further, in embodiments where a plurality of groups of association relationships among the first hash value, the software identifier, and the version identifier of the SDK are maintained in the SDK, the step of storing the first hash value in the trusted execution environment may include: obtaining the software identifier of the application software and the version identifier of the SDK; decrypting the ciphertext of the first hash value and storing the first hash value; and storing the association relationship among the first hash value, the software identifier of the application software, and the version identifier of the SDK.

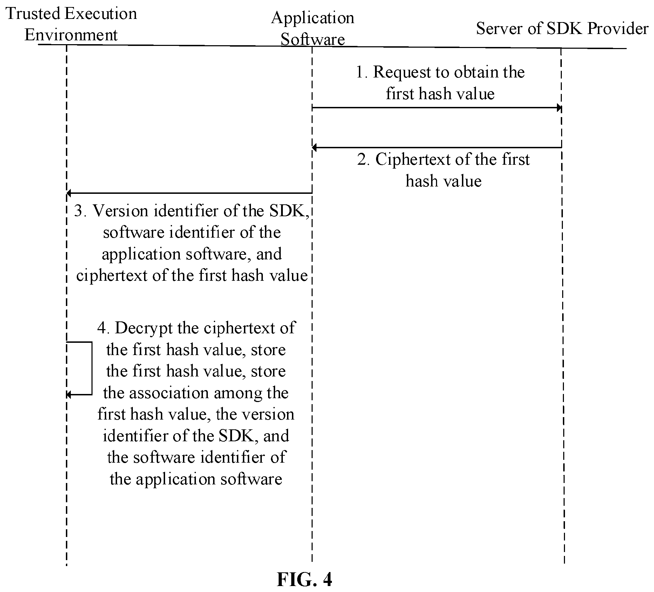

FIG. 4 is a schematic diagram of storing a first hash value based on an online environment of an electronic device provided by this disclosure. As shown in FIG. 4, the application software (specifically, an application module within the application software other than the SDK) can, before requesting initialization of the SDK, request the server of the SDK provider to obtain the ciphertext of the first hash value of the normative information of the integrity-related files of the SDK. The server of the SDK provider sends the ciphertext of the first hash value to the application software. The application software transmits the software identifier of the application software, the version identifier of the SDK, and the ciphertext of the first hash value to the trusted execution environment, and invokes the trusted execution environment to decrypt the ciphertext of the first hash value. The trusted execution environment then stores the first hash value, as well as the association relationship among the first hash value, the software identifier of the application software, and the version identifier of the SDK.

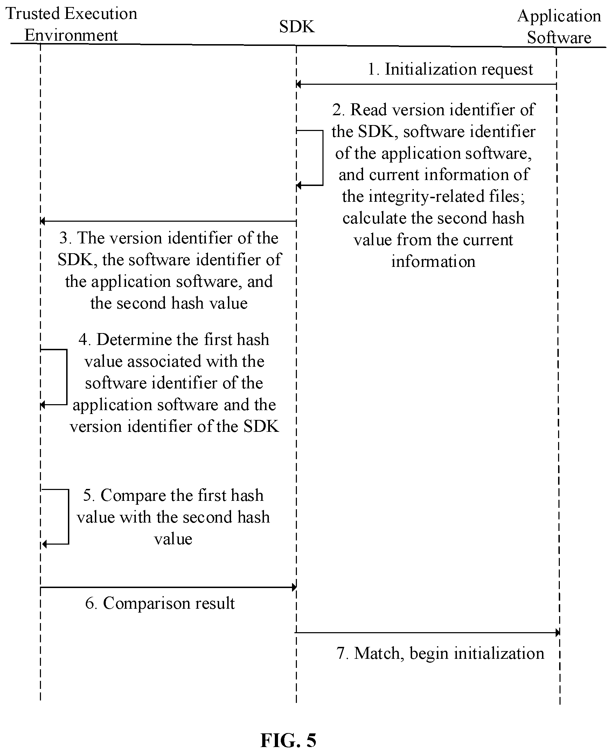

Based on FIG. 4, FIG. 5 is a schematic diagram of another method for verifying integrity of an SDK provided by this disclosure. As shown in FIG. 5, the application software (specifically, an application module within the application software other than the SDK) sends an initialization request to the SDK. The SDK needs to perform integrity verification on itself. The SDK reads the current information of the integrity-related files and calculates the second hash value. The SDK transmits the first hash value, the second hash value, the software identifier of the application software, and the version identifier of the SDK to the trusted execution environment, and invokes the trusted execution environment to perform the comparison (first determining the first hash value associated with the software identifier and the version identifier, and then comparing the determined first hash value with the second hash value). The trusted execution environment feeds back the comparison result to the SDK. If the SDK determines that the first hash value matches the second hash value, the SDK begins initialization.

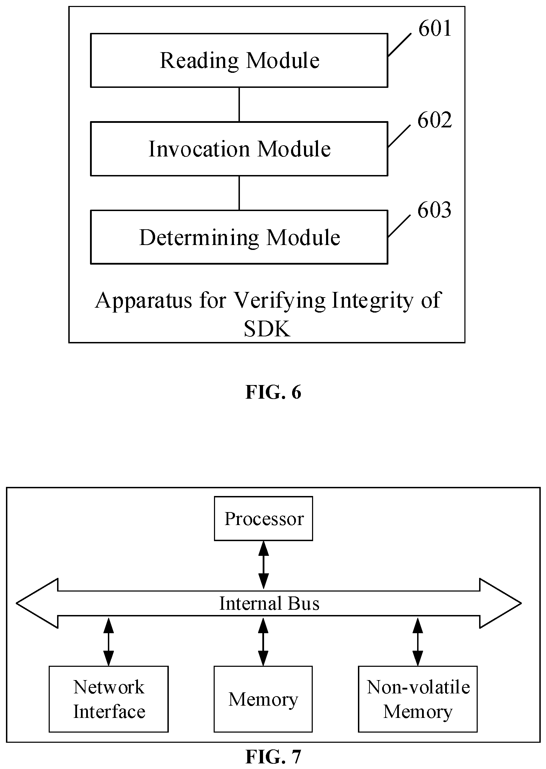

Additionally, embodiments of this specification further provide a schematic structural diagram of an apparatus for verifying integrity of an SDK, as shown in FIG. 6. The electronic device has a trusted execution environment. A first hash value is stored in the trusted execution environment. The first hash value is a hash value of normative information of integrity-related files in a software development kit (SDK). Application software on the electronic device has the SDK embedded therein. The apparatus includes: a reading module 601, configured to, in response to the application software requesting initialization of the SDK, read current information of the integrity-related files in the SDK, and calculate a hash value of the current information as a second hash value; an invocation module 602, configured to invoke the trusted execution environment to compare the first hash value with the second hash value; and a determining module 603, configured to, in response to determining that the first hash value matches the second hash value, determine that integrity verification of the SDK is passed.

The above apparatus embodiments correspond to the method embodiments, and specific descriptions can be found in the descriptions of the method embodiment section, which are not repeated here. The apparatus embodiments are obtained based on the corresponding method embodiments and have the same technical effects as the corresponding method embodiments. For specific descriptions, reference can be made to the corresponding method embodiments.

Embodiments of this specification further provide a computer storage medium. The computer storage medium may store a plurality of instructions. The instructions are adapted to be loaded and executed by a processor to perform the method of the embodiments of this disclosure.

This specification further provides a computer program product. The computer program product stores at least one instruction. The at least one instruction is loaded and executed by the processor to perform the method of the embodiments of this disclosure.

Embodiments of this specification further provide the schematic structural diagram of the electronic device shown in FIG. 7. As shown in FIG. 7, at the hardware level, the electronic device includes a processor, an internal bus, a network interface, memory, and non-volatile memory, and may also include other hardware required for other operations. The processor reads a corresponding computer program from the non-volatile memory into the memory and then runs the computer program to implement the above voice activity detection method.

Of course, in addition to software implementation, this specification does not exclude other implementations, such as logic devices or a combination of software and hardware, etc. That is, the execution entity of the following processing flow is not limited to each logic unit, and may also be hardware or logic devices.

In the 1990s, an improvement to a technology could be clearly distinguished as an improvement in hardware (for example, an improvement to a circuit structure such as a diode, a transistor, or a switch) or an improvement in software (an improvement to a method flow). However, with the development of technology, many improvements to method flows today can already be regarded as direct improvements to hardware circuit structures. Designers almost all obtain corresponding hardware circuit structures by programming improved method flows into hardware circuits. Therefore, it cannot be said that an improvement to a method flow cannot be implemented by a hardware entity module. For example, a programmable logic device (PLD) (for example, a field programmable gate array (FPGA)) is such an integrated circuit whose logic functions are determined by user programming of the device. A designer programs on his/her own to "integrate" a digital system onto a single PLD without requiring a chip manufacturer to design and fabricate a dedicated integrated circuit chip. Moreover, nowadays, instead of manually fabricating integrated circuit chips, such programming is mostly implemented using "logic compiler" software, which is similar to a software compiler used in program development and writing. The original code before compilation also needs to be written in a specific programming language, which is referred to as a hardware description language (HDL). There are many types of HDLs, such as ABEL (Advanced Boolean Expression Language), AHDL (Altera Hardware Description Language), Confluence, CUPL (Cornell University Programming Language), HDCal, JHDL (Java Hardware Description Language), Lava, Lola, MyHDL, PALASM, RHDL (Ruby Hardware Description Language), etc. VHDL (Very-High-Speed Integrated Circuit Hardware Description Language) and Verilog are currently the most commonly used. A person skilled in the art should also understand that it is only necessary to logically program the method flow using the above hardware description languages and program it into an integrated circuit to easily obtain a hardware circuit that implements the logic method flow.

A controller may be implemented in any suitable manner. For example, the controller may take the form of, for example, a microprocessor or processor and a computer-readable medium storing computer-readable program code (such as software or firmware) executable by the (micro)processor, logic gates, switches, an application specific integrated circuit (ASIC), a programmable logic controller, and an embedded microcontroller. Examples of the controller include, but are not limited to, the following microcontrollers: ARC 625D, Atmel AT91 SAM, Microchip PIC18F26K20, and Silicone Labs C8051F320. The memory controller may also be implemented as part of the control logic of the memory. A person skilled in the art also knows that, in addition to implementing a controller by purely computer-readable program code, it is entirely possible to make the controller implement the same functions in the form of logic gates, switches, application specific integrated circuits, programmable logic controllers, and embedded microcontrollers, etc., by logically programming the method steps. Therefore, such controller can be regarded as a hardware component, and the means included therein for implementing various functions can also be regarded as structures within the hardware component. Additionally, the means for implementing various functions can be regarded as either software modules for implementing the method or structures within hardware components.

The systems, apparatuses, modules, or units described in the above embodiments may be specifically implemented by computer chips or entities, or by products having certain functions. A typical implementation device is a computer. Specifically, the computer may be, for example, a personal computer, a laptop computer, a cellular phone, a camera phone, a smartphone, a personal digital assistant, a media player, a navigation device, an email device, a game console, a tablet computer, a wearable device, or a combination of any of these devices.

For convenience of description, the above apparatus is described by dividing functions into various units. Of course, when implementing this specification, the functions of each unit may be implemented in one or more pieces of software and/or hardware.

A person skilled in the art should understand that embodiments of this specification may be provided as a method, a system, or a computer program product. Therefore, this specification may take the form of an entirely hardware embodiment, an entirely software embodiment, or an embodiment combining software and hardware aspects. Moreover, this specification may take the form of a computer program product implemented on one or more computer-usable storage media (including, but not limited to, magnetic disk storage, CD-ROM, optical storage, etc.) containing computer-usable program code.

This specification is described with reference to flowcharts and/or block diagrams of methods, devices (systems), and computer program products according to embodiments of this specification. It should be understood that each flow and/or block in the flowcharts and/or block diagrams, and combinations of flows and/or blocks in the flowcharts and/or block diagrams, can be implemented by computer program instructions. These computer program instructions may be provided to a processor of a general-purpose computer, a special-purpose computer, an embedded processor, or other programmable data processing device to produce a machine, such that the instructions executed by the processor of the computer or other programmable data processing device produce means for implementing the functions specified in one or more flows of the flowcharts and/or one or more blocks of the block diagrams.

These computer program instructions may also be stored in a computer-readable memory that can direct a computer or other programmable data processing device to function in a particular manner, such that the instructions stored in the computer-readable memory produce an article of manufacture including instruction means that implement the functions specified in one or more flows of the flowcharts and/or one or more blocks of the block diagrams.

These computer program instructions may also be loaded onto a computer or other programmable data processing device to cause a series of operational steps to be performed on the computer or other programmable device to produce a computer-implemented process, such that the instructions executed on the computer or other programmable device provide steps for implementing the functions specified in one or more flows of the flowcharts and/or one or more blocks of the block diagrams.

In a typical configuration, a computing device includes one or more processors (CPUs), input/output interfaces, network interfaces, and memory.

The memory may include non-permanent memory in computer-readable media, random access memory (RAM), and/or non-volatile memory, such as read-only memory (ROM) or flash memory (flash RAM). The memory is an example of computer-readable media.

Computer-readable media include permanent and non-permanent, removable and non-removable media that can implement information storage by any method or technology. The information can be computer-readable instructions, data structures, modules of programs, or other data. Examples of storage media of a computer include, but are not limited to, phase change memory (PRAM), static random access memory (SRAM), dynamic random access memory (DRAM), other types of random access memory (RAM), read-only memory (ROM), electrically erasable programmable read-only memory (EEPROM), flash memory or other memory technologies, compact disc read-only memory (CD-ROM), digital versatile discs (DVDs) or other optical storage, magnetic cassettes, magnetic tape, magnetic disk storage or other magnetic storage devices, or any other non-transmission medium that can be used to store information accessible by a computing device. As defined herein, computer-readable media does not include transitory media, such as modulated data signals and carrier waves.

It should also be noted that the terms "include" , "comprise," or any other variation thereof are intended to cover non-exclusive inclusion, such that a process, method, article, or device that includes a series of elements not only includes those elements but also includes other elements not explicitly listed, or also includes elements inherent to such process, method, article, or device. Without further limitation, an element defined by the phrase "comprising a ..." does not preclude the existence of additional identical elements in the process, method, article, or device that includes the element.

A person skilled in the art should understand that embodiments of this specification may be provided as a method, a system, or a computer program product. Therefore, this specification may take the form of an entirely hardware embodiment, an entirely software embodiment, or an embodiment combining software and hardware aspects. Moreover, this specification may take the form of a computer program product implemented on one or more computer-usable storage media (including, but not limited to, magnetic disk storage, CD-ROM, optical storage, etc.) containing computer-usable program code.

This specification may be described in the general context of computer-executable instructions executed by a computer, such as program modules. Generally, program modules include routines, programs, objects, components, data structures, etc. that perform particular tasks or implement particular abstract data types. This specification may also be practiced in distributed computing environments in which tasks are performed by remote processing devices that are connected through a communication network. In distributed computing environments, program modules may be located in both local and remote computer storage media including storage devices.

The various embodiments in this specification are described in a progressive manner, and the same or similar parts among the various embodiments can be referred to each other. Each embodiment focuses on the differences from other embodiments. In particular, for system embodiments, since they are basically similar to method embodiments, the description is relatively simple, and for related parts, reference can be made to the partial descriptions of the method embodiments.

The above descriptions are merely embodiments of this specification and are not intended to limit this specification. For a person skilled in the art, this specification may have various modifications and changes. Any modification, equivalent replacement, improvement, etc., made within the spirit and principle of this specification shall be included within the scope of the claims of this specification.

## Claims

1. A method for verifying integrity of an SDK, wherein an electronic device has a trusted execution environment, a first hash value is stored in the trusted execution environment, the first hash value is a hash value of normative information of integrity-related files in the SDK, application software on the electronic device has the SDK embedded therein, and the method comprises:
in response to the application software requesting initialization of the SDK, reading current information of the integrity-related files in the SDK, and calculating a hash value of the current information as a second hash value;
invoking the trusted execution environment to compare the first hash value with the second hash value; and
in response to determining that the first hash value matches the second hash value, determining that integrity verification of the SDK is passed.

2. The method according to claim 1, wherein the trusted execution environment further stores an association relationship among the first hash value, a software identifier of the application software, and a version identifier of the SDK;
invoking the trusted execution environment to compare the first hash value with the second hash value comprises:
invoking the trusted execution environment to determine the first hash value associated with the software identifier and the version identifier, and comparing the first hash value with the second hash value.

3. The method according to claim 1, wherein the trusted execution environment stores a decryption key designated by an SDK provider, the SDK comprises a ciphertext of the first hash value, and the ciphertext of the first hash value is obtained by encryption using an encryption key corresponding to the decryption key;
a step of storing the first hash value in the trusted execution environment comprises:
in response to the application software requesting initialization of the SDK for a first time, invoking the trusted execution environment to decrypt the ciphertext of the first hash value and store the first hash value.

4. The method according to claim 1, wherein the trusted execution environment stores a decryption key designated by an SDK provider;
a step of storing the first hash value in the trusted execution environment comprises:
before the application software requests initialization of the SDK, obtaining a ciphertext of the first hash value from a server of the SDK provider, wherein the ciphertext of the first hash value is obtained by encryption using an encryption key corresponding to the decryption key; and
invoking the trusted execution environment to decrypt the ciphertext of the first hash value and store the first hash value.

5. The method according to claim 4, wherein obtaining the ciphertext of the first hash value from the server of the SDK provider comprises:
obtaining, by the application software, the ciphertext of the first hash value from the server of the SDK provider.

6. The method according to any one of claims 3 to 5, wherein invoking the trusted execution environment to decrypt the ciphertext of the first hash value and store the first hash value comprises:
invoking the trusted execution environment to execute:
obtaining a software identifier of the application software and a version identifier of the SDK; decrypting the ciphertext of the first hash value; storing the first hash value; and storing an association relationship among the first hash value, the software identifier of the application software, and the version identifier of the SDK.

7. The method according to claim 1, further comprising:
in response to determining that the integrity verification of the SDK is passed, beginning initialization of the SDK.

8. The method according to any one of claims 1 to 4 and 7, wherein the method is applied to the SDK.

9. An apparatus for verifying integrity of an SDK, wherein an electronic device has a trusted execution environment, a first hash value is stored in the trusted execution environment, the first hash value is a hash value of normative information of integrity-related files in the SDK, application software on the electronic device has the SDK embedded therein, and the apparatus comprises:
a reading module, configured to, in response to the application software requesting initialization of the SDK, read current information of the integrity-related files in the SDK, and calculate a hash value of the current information as a second hash value;
an invocation module, configured to invoke the trusted execution environment to compare the first hash value with the second hash value; and
a determining module, configured to, in response to determining that the first hash value matches the second hash value, determine that integrity verification of the SDK is passed.

10. A storage medium having a computer program stored thereon, wherein the computer program, when executed by a processor, implements the steps of the method according to any one of claims 1 to 8.

11. An electronic device, comprising: a processor and a memory; wherein the memory stores a computer program, and the computer program is adapted to be loaded and executed by the processor to perform the steps of the method according to any one of claims 1 to 8.

12. A computer program product having at least one instruction stored thereon, wherein the at least one instruction, when executed by a processor, implements the steps of the method according to any one of claims 1 to 8.
